# EUROPÄISCHE PATENTSCHRIFT

(11) **EP 1 807 969 B1**
(45) Veröffentlichungstag und Bekanntmachung des Hinweises auf die Patenterteilung: **15.04.2009**
(21) Anmeldenummer: 04790228.3
(22) Anmeldetag: 08.10.2004
(51) Int. Cl.: H04L 12/14

(54) **VERFAHREN ZUR KONFIGURATION VON GEBÜHRENPROZESSEN AUF NETZELEMENTEN**
METHOD FOR CONFIGURING BILLING PROCESSES IN NETWORK ELEMENTS
PROCEDE POUR CONFIGURER DES PROCESSUS DE TAXATION SUR DES ELEMENTS DE RESEAU

(43) Veröffentlichungstag der Anmeldung: 18.07.2007
(73) Patentinhaber: Nokia Siemens Networks GmbH & Co. KG, 81541 München (DE)
(72) Erfinder: FÖLL, Uwe, 14612 Falkensee (DE)
(86) Internationale Anmeldenummer: PCT/EP2004/011296
(87) Internationale Veröffentlichungsnummer: WO 2006/039934

(56) Entgegenhaltungen:
- ALBAN COUTURIER ALCATEL: "Signaling for QoS Measurement" IETF STANDARD-WORKING-DRAFT, INTERNET ENGINEERING TASK FORCE, IETF, CH, Mai 2003 (2003-05), XP015000601 ISSN: 0000-0004
- DRESSLER F ET AL: "NSLP for Accounting Configuration Signaling" INTERNET DRAFT, [Online] 11. Juli 2004 (2004-07-11), Seiten 1-18, XP002333853 Gefunden im Internet: URL:http://www.watersprings.org/pub/id/dra ft-dressler-nsis-accounting-nslp-00.txt> [gefunden am 2005-06-29]

## Beschreibung

Die Erfindung betrifft ein Verfahren zur Konfiguration von Gebührenprozessen auf Netzelementen eines Datenpfads für eine Paketdatenübertragung in einem Kommunikationssystem gemäß dem Oberbegriff des Patentanspruchs 1.

Es sind Paketdatendienste bekannt, die innerhalb eines Kommunikationsnetzes beispielsweise den so genannten "IP Layer 3" des "Open Systems Interconnection Reference, OSI" - Modells, verwenden. Dieses Modell dient als Referenzmodell der Internationalen Standardisierungsorganisation ISO für Netzwerke, um eine offene Kommunikation über Schnittstellenstandards zu definieren.

Eine Gebührenerfassung für einen Datendienst, beispielsweise für einen Paketdatendienst, beruht dabei auf einer unabhängigen und nicht synchronisierten Erfassung von Netzelementen, die zur Durchführung des Datendienstes genutzt werden. Die an der Übertragung eines Datendienstes beteiligten Netzelemente weisen dabei jeweils zugeordnete Gebührenprozesse auf, die zur Erfassung von Gebührendaten verwendet werden. Die Gebührendaten werden in speziell dafür vorgesehenen Netzelementen zusammengeführt, um eine dienstorientierte bzw. dienstspezifische Rechnung zu erstellen.

Die an der Gebührendatenerfassung beteiligten Netzelemente verfügen über eine eindeutige Korrelationskennung, um alle zu einer konkreten Dienstnutzung gehörenden Gebührendaten identifizieren zu können.
Die Korrelationskennung wird in die Gebührendaten eingetragen, damit die Gebührendaten durch eine zentrale Instanz miteinander in Verbindung gebracht und für eine Gebührenerfassung zusammen verarbeitet werden können.

Ein zentrales Problem einer derartigen Gebührenerfassung ist die Verteilung der eindeutigen Korrelationskennung an die jeweiligen Netzelemente. Die bei Durchführung eines Dienstes beteiligten Netzelemente arbeiten im allgemeinen auf unterschiedlichen Netzschichten, beispielsweise auf Layern des OSI-Modells - dem Layer 2, Layer 3 oder Layer 7.

Zusätzliche Probleme bei der Gebührenerfassung werden verursacht, wenn die Netzelemente in verschiedenen Netzbereichen angeordnet sind, beispielsweise wenn sie in einer so genannten "Packet Switched, PS"-Domain oder in einem so genannten "IP Multimedia Subsystem, IMS" angeordnet sind.
Weiter ist es möglich, dass die an der Durchführung eines Paketdatendienstes beteiligten Netzelemente durch Technologiegrenzen voneinander getrennt sind. So kann beispielsweise ein Teil der Netzelemente auf dem so genannten "Universal Mobile Telecommunication System, UMTS" basieren, während ein anderer Teil der Netzelemente auf dem so genannten "Wireless Local Area Network, WLAN" basiert.

In diesen geschilderten Fällen muss für jeden neuen Paketdatendienst ein Mechanismus zur Verteilung der jeweiligen Korrelationskennung definiert und standardisiert werden, wodurch eine schnelle Einführung neuer Dienste nur mit großem Aufwand möglich ist. So konnte beispielsweise der bekannte "Multi Media Service, MMS" für Pre-Paid-Teilnehmer lange Zeit aufgrund fehlender Gebührenerfassungsmethoden nicht angeboten werden. Die Verfahren zur Verteilung der Korrelationskennungen für eine Gebührenerfassung sind also nur mit großem Aufwand zu realisieren, weil Gebührendaten in den beteiligten Netzelementen gesammelt und resultierende Gebührendatensätze an eine zentrale Instanz weitergeleitet werden müssen. Die zentrale Instanz wiederum muss aus einer ankommenden Datenflut zusammengehörige Gebührendatensätze ermitteln und unter hohem Zeitaufwand auswerten.

Verfahren zur Gebührenerfassung bzw. Verfahren zur Konfiguration von Gebührenprozessen auf den beteiligten Netzelementen werden beispielsweise von der "Internet Engineering Task Force, IETF" im Rahmen des Projekts "Next Steps in Signaling, NSIS" diskutiert, wobei grundlegende Internet-Routing-Verfahren benutzt werden, um Netzelemente eines Datenpfads aufzufinden.

Aus "Signaling of QoS Measurements", von Couturier, IETF Standard-Working-Draft, Internet Engineering Task Force, IETF, CH, Mai 2003, XP 015000601, ISSN 0000-0004, und aus "NSLP for Accounting Configuration Signaling", Dressler et al., Internet Draft, "Online!, 11.07.2004, XP 002333853, sind Verfahren zur Konfiguration von Gebührenprozessen bekannt.

Es ist Aufgabe der vorliegenden Erfindung, ein einfach und schnell durchführbares Verfahren zur Konfiguration von Gebührenprozessen auf Netzelementen zu realisieren, um Gebühren für einen Paketdatendienst in einem Kommunikationsnetz erfassen zu können.

Die Aufgabe der Erfindung wird durch die Merkmale des Patentanspruchs 1 gelöst. Vorteilhafte Weiterbildungen sind in den Unteransprüchen angegeben.

Der Erfindung liegt die Erkenntnis zugrunde, dass bei einem typischerweise asymmetrisch durchgeführten Internet-Routing für einen durchzuführenden Paketdatendienst unterschiedliche Routen bzw. Datenpfade für die durchzuführende Paketdatenübertragung benutzt werden. Im allgemeinen erfolgt die Paketdatenübertragung zwischen einem Endgerät, beispielsweise einem Funkkommunikationsendgerät oder Terminal, einerseits und einem Anwendungsrechner andererseits in zwei Richtungen und damit über zwei Datenpfade.

Da die derzeitigen Routing-Verfahren die jeweiligen Netzelemente eines Datenpfads nur in einer Richtung adressieren können, ist eine Konfiguration zur Gebührenerfassung seitens eines Netzelements zwischen den beiden Endpunkten - Endgerät einerseits und Anwendungsrechner andererseits - nicht möglich. Eine Konfiguration seitens des Endgeräts scheidet aus Gründen der Sicherheit aus. Eine Konfiguration seitens des Anwendungsrechners ist aus Kosten- bzw. aus Zeitgründen nicht ohne weiteres realisierbar.

Diese Probleme werden bei dem erfindungsgemäßen Verfahren vermieden. Erfindungsgemäß wird zur Konfiguration der Netzelemente eines Datenpfads eine Gebührenkontrollfunktion verwendet, die an einem zentralen Netzelement abgelegt ist. Dieses zentrale Netzelement ist dabei nicht Datenpfad-Bestandteils, d.h. die betrachtete Paketdatenübertragung wird nicht über das zentrale Netzelement durchgeführt.

Die Gebührenkontrollfunktion bildet eine Konfigurationsnachricht zur Konfiguration der Netzelemente und wird beispielsweise bei einer Dienstanforderung gestartet. Die Konfigurationsnachricht wird über den Anwendungsrechner als erstes Netzelement an die zu konfigurierenden Netzelemente des Datenpfads übertragen. Diejenigen Netzelemente, die zu konfigurieren sind, werten die Konfigurationsnachricht für eine Initialisierung aus, während andere Netzelemente des Datenpfads lediglich die Konfigurationsnachricht weiterleiten.

Innerhalb des Kommunikationsnetzes wird bevorzugt, jedoch nicht ausschließlich, das an sich bekannte "Network Link Services Protokoll, NLSP" verwendet, um die Konfigurationsnachricht zusammen mit weiteren Signalisierungsnachrichten an die Netzelemente zu übertragen.

Erfindungsgemäß wird als Zugangsknoten zum Datenpfad nicht das Endgerät sondern ein dem Endgerät zugeordnetes, vorgelagertes Netzelement verwendet. Entsprechend wird die Konfigurationsnachricht vom zentralen Netzelement und nicht von dem als weiteren Zugangsknoten zum Datenpfad verwendeten Anwendungsrechner gebildet. Durch diese Maßnahmen wird sowohl die Sicherheit der Gebührenerfassung als auch die hohe Verarbeitungsgeschwindigkeit des Anwendungsrechners gewährleistet.

Mit Hilfe des erfindungsgemäßen Verfahrens wird eine zentrale Gebührenkontrollfunktion zur Speicherung von Konfigurationsregeln realisiert.

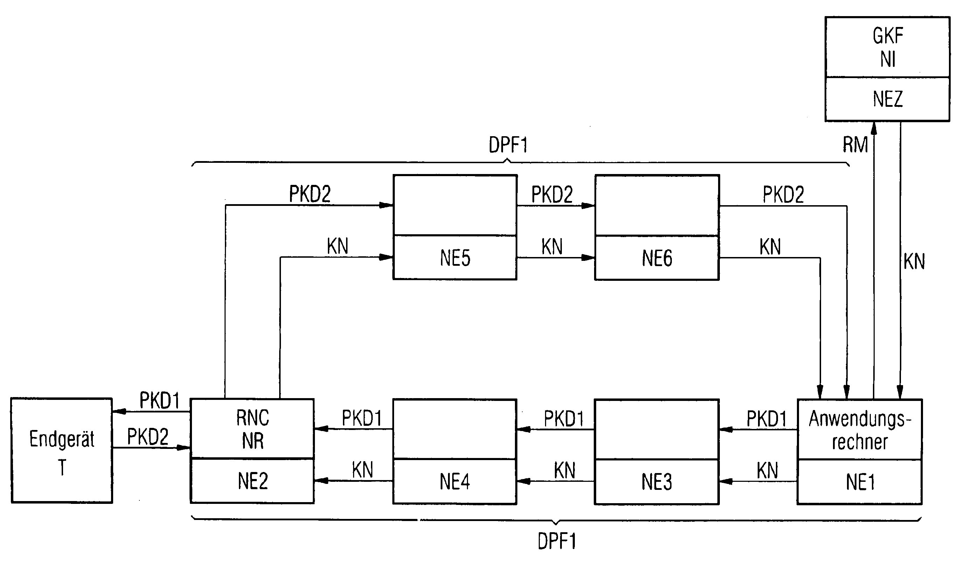

Die Erfindung wird anhand einer Zeichnung näher erläutert. Dabei zeigt FIG 1 das erfindungsgemäße Verfahren anhand eines Kommunikationsnetzes.

Das Kommunikationsnetz weist dabei Netzelemente NE1 bis NE6, ein zentrales Netzelement NEZ und ein Endgerät T auf, wobei ein erstes Netzelement NE1 als Anwendungsrechner und ein zweites Netzelement NE2 als Radio-Network-Controller RNC ausgebildet ist.

Auf dem zentralen Netzelement NEZ ist eine Gebührenkontrollfunktion GKF abgelegt bzw. implementiert. Bei einer angeforderten Paketdatenübertragung PKD1, PKD2 zwischen dem ersten Netzelement NE1 und dem Endgerät T, die über das zweite Netzelement NE2 erfolgt, wird durch die Gebührenkontrollfunktion GKF eine Konfigurationsnachricht KN gebildet, die zur Konfiguration der Netzelemente NE3, NE4, NE5 und NE6 verwendet wird. Die Konfigurationsnachricht KN wird an Netzelemente NEx eines ersten Datenpfads DPF1 übertragen, wobei der erste Datenpfad DPF1 die Netzelemente NE1, NE3, NE4 und NE2 beinhaltet.

Eine zugeordnete erste Paketdatenübertragung PKD1 erfolgt längs des ersten Datenpfades DPF1 vom ersten Netzelement NE1 über die Netzelemente NE3 und NE4 und über das zweite Netzelement NE2 zum Endgerät T, wobei das Endgerät T dem zweiten Netzelement NE2 zugeordnet ist.

Die Konfigurationsnachricht KN verwendet eine IP-Adresse oder eine Port-Adresse des Endgeräts T als Zieladresse, wodurch auch die erste Paketdatenübertragung PKD1 vom ersten Netzelement NE1 zum Endgerät T festgelegt ist.

Auf dem zweiten Netzelement NE2 ist eine Empfangsfunktion implementiert, durch die ermöglicht wird, die Konfigurationsnachricht KN vom zweiten Netzelement NE2 zum ersten Netzelement NE1 über einen weiteren zweiten Datenpfad DPF2 im Rahmen einer zweiten Paketdatenübertragung PKD2 zurückzusenden.

Die Konfigurationsnachricht KN wird an Netzelemente NEx des zweiten Datenpfads DPF2 übertragen, wobei der zweite Datenpfad DPF2 die Netzelemente NE2, NE5, NE6 und NE2 beinhaltet.

Zu diesem Zweck wird der Konfigurationsnachricht KN seitens des Endgeräts eine IP-Adresse oder Port-Adresse des ersten Netzelements NE1 zugeordnet, mit der auch die zweite Paketdatenübertragung PKD2 vom Endgerät T über das zweite Netzelement NE2 und über den zweiten Datenpfad DPF2 zum ersten Netzelement NE1 festgelegt ist.

Die zweite Paketdatenübertragung PKD2 erfolgt längs des zweiten Datenpfades DPF2 vom Endgerät T über das zweite Netzelement NE2 und die Netzelemente NE5 und NE6 zum ersten Netzelement NE1.

Die Netzelemente NE3 bis NE6 empfangen in dem hier dargestellten Fall die jeweilige Konfigurationsnachricht KN und werten diese zur Initialisierung und Konfigurierung aus. Dabei ist es jedoch auch möglich, dass einige Netzelemente - hier nicht dargestellt - die Konfigurationsnachricht KN lediglich weiterleiten.

Abschließend werden gesammelte Gebührendaten RM an das zentrale Netzelement NEZ zurückgemeldet.

Für den Fall mehrerer als "Session" bekannter paralleler Übertragungen zwischen dem Anwendungsrechner ausgebildeten ersten Netzelement NE1 einerseits und dem Endgerät T andererseits werden durch den Anwendungsrechner mit Hilfe so genannter "Session-Identities" die jeweiligen Datenpfade definiert.

Vorteilhafterweise wird das Protokoll NLSP zur Übertragung der Konfigurationsnachricht KN verwendet. In diesem Fall bildet gemäß der NSIS-Terminologie der Radio-Network-Controller RNC einen NSIS-Receiver NR und das zentrale Netzelement NEZ einen NSIS-Initiator NI.

## Patentansprüche

1. Verfahren zur Konfiguration von Gebührenprozessen auf Netzelementen eines Datenpfads für eine Paketdatenübertragung in einem Kommunikationssystem,
- bei dem zwischen einem ersten und einem zweiten Netzelement angeordnete Netzelemente des Datenpfads konfiguriert werden,
- bei dem die einem Endgerät zugeordnete Paketdatenübertragung vom ersten Netzelement zum zweiten Netzelement über den Datenpfad durchgeführt wird und das Endgerät die zugeordnete Paketdatenübertragung über das zweite Netzelement sendet oder empfängt,
- bei dem eine auf einem zentralen dritten Netzelement, das dem Datenpfad nicht zugeordnet ist, abgelegte Gebührenkontrollfunktion eine Konfigurationsnachricht zur Konfiguration der Netzelemente bildet und die Konfigurationsnachricht über das erste Netzelement an die Netzelemente des Datenpfads übertragen wird, und die Netzelemente zumindest teilweise die Konfigurationsnachricht zur Initialisierung und Konfigurierung auswerten,
**dadurch gekennzeichnet,**
- **dass** der Konfigurationsnachricht seitens des Endgeräts eine IP-Adresse oder Port-Adresse des ersten Netzelements als Zieladresse zugeordnet wird, mit der die Paketdatenübertragung vom Endgerät über das zweite Netzelement und über einen weiteren Datenpfad zum ersten Netzelement festgelegt wird, und
- **dass** die Konfigurationsnachricht an Netzelemente des weiteren Datenpfads übertragen wird und diese Netzelemente zumindest teilweise die Konfigurationsnachricht zur Initialisierung und Konfigurierung auswerten.

2. Verfahren nach Anspruch 1, **dadurch gekennzeichnet, dass** die Konfigurationsnachricht eine IP-Adresse oder Port-Adresse des Endgeräts als Zieladresse verwendet, mit der die Paketdatenübertragung vom ersten Netzelement zum Endgerät festgelegt wird.

3. Verfahren nach einem der vorhergehenden Ansprüche, **dadurch gekennzeichnet, dass** die Konfigurationsnachricht unter Verwendung eines NLSP-Protokolls zu den Netzelementen übertragen wird.

4. Verfahren nach einem der vorhergehenden Ansprüche, **dadurch gekennzeichnet, dass** als erstes Netzelement ein Anwendungsrechner verwendet wird.

5. Verfahren nach einem der vorhergehenden Ansprüche, **dadurch gekennzeichnet, dass** als Endgerät ein Funkkommunikationsendgerät eines Funkkommunikationssystems verwendet wird.

6. Verfahren nach Anspruch 5, **dadurch gekennzeichnet, dass** als zweites Netzelement eine Kontrolleinrichtung des Funkkommunikationssystems verwendet wird.

7. Verfahren nach Anspruch 6, **dadurch gekennzeichnet, dass** als Kontrolleinrichtung ein Radio-Network-Controller des Funkkommunikationssystems verwendet wird.

## Claims

1. Method for configuring charge processes on network elements in a data path for packet data transmission in a communication system,
- in which network elements arranged between a first and a second network element in the data path are configured,
- in which a terminal's associated packet data transmission from the first network element to the second network element is carried out via the data path, and the terminal sends or receives the associated packet data transmission via the second network element,
- in which a charge control function stored on a central third network element, which is not associated with the data path, forms a configuration message for configuring the network elements, and the configuration message is transmitted via the first network element to the network elements in the data path, and at least some of the network elements evaluate the configuration message for initialization and configuration,
**characterized**
- **in that** the terminal allocates the configuration message an IP address or port address for the first network element as a destination address which is used to stipulate the packet data transmission from the terminal via the second network element and via a further data path to the first network element, and
- **in that** the configuration message is transmitted to network elements in the further data path, and at least some of these network elements evaluate the configuration message for initialization and configuration.

2. Method according to Claim 1, **characterized in that** the configuration message uses an IP address or port address for the terminal as a destination address which is used to stipulate the packet data transmission from the first network element to the terminal.

3. Method according to one of the preceding claims, **characterized in that** the configuration message is transmitted to the network elements using an NLSP protocol.

4. Method according to one of the preceding claims, **characterized in that** the first network element used is an application computer.

5. Method according to one of the preceding claims, **characterized in that** the terminal used is a radio communication terminal in a radio communication system.

6. Method according to Claim 5, **characterized in that** the second network element used is a control device in the radio communication system.

7. Method according to Claim 6, **characterized in that** the control device used is a radio network controller in the radio communication system.

## Revendications

1. Procédé pour la configuration de processus de taxation sur des éléments de réseau d'un chemin de données pour une transmission de données en paquet dans un système de communication,
- dans lequel des éléments de réseau du chemin de données, disposés entre un premier et un second élément de réseau sont configurés,
- dans lequel la transmission de données en paquet attribuée à un terminal du premier élément de réseau au second élément de réseau est effectuée par le chemin de données et le terminal envoie ou reçoit la transmission attribuée de données en paquet par le second élément de réseau,
- dans lequel une fonction de contrôle de taxes déposée sur un troisième élément de réseau central, qui n'est pas attribué au chemin de données, forme un message de configuration pour la configuration des éléments de réseau et le message de configuration est transmis via le premier élément de réseau aux éléments de réseau du chemin de données, et les éléments de réseau évaluent au moins partiellement le message de configuration pour l'initialisation et la configuration,
**caractérisé en ce que**
- une adresse IP ou une adresse de port du premier élément de réseau en tant qu'adresse cible est attribuée au message de configuration au niveau du terminal, adresse avec laquelle la transmission de données en paquet du terminal au premier élément de réseau via le second élément de réseau et via un autre chemin de données est définie, et
- **en ce que** le message de configuration est transmis à des éléments de réseau de l'autre chemin de données et ces éléments de réseau évaluent au moins partiellement le message de configuration pour l'initialisation et la configuration.

2. Procédé selon la revendication 1, **caractérisé en ce que** le message de configuration utilise une adresse IP ou une adresse de port du terminal comme adresse cible, avec laquelle la transmission de données en paquet du premier élément de données au terminal est définie.

3. Procédé selon 1"une quelconque des revendications précédentes, **caractérisé en ce que** le message de configuration est transmis aux éléments de réseau en utilisant un protocole NLSP.

4. Procédé selon l'une quelconque des revendications précédentes, **caractérisé en ce qu'**un ordinateur d'application est utilisé comme premier élément de réseau.

5. Procédé selon l'une quelconque des revendications précédentes, **caractérisé en ce qu'**un terminal de radiocommunication d'un système de radiocommunication est utilisé comme terminal.

6. Procédé selon la revendication 5, **caractérisé en ce qu'**un dispositif de contrôle du système de radiocommunication est utilisé comme second élément de réseau.

7. Procédé selon la revendication 6, **caractérisé en ce que** qu'un contrôleur de réseau radio (Radio-Network-Controller) du système de radiocommunication est utilisé comme dispositif de contrôle.
